(19) Europäisches Patentamt
European Patent Office
Office européen des brevets

(11) Numéro de publication: **0 236 398 B1**

# (12) FASCICULE DE BREVET EUROPEEN

(45) Date de publication du fascicule du brevet: **23.01.91**

(21) Numéro de dépôt: **86905322.3**

(22) Date de dépôt: **15.09.86**

(86) Numéro de dépôt international: **PCT/FR86/00310**

(87) Numéro de publication internationale: **WO 87/01694 26.03.87 Gazette 87/07**

(51) Int. Cl.[5]: **C 04 B 38/00,** B 01 D 61/00, G 01 N 27/00, B 01 D 39/00

## (54) COUCHES MINCES MICROPOREUSES A POROSITE OUVERTE AYANT DES PROPRIETES DE CONDUCTION.

(30) Priorité: **13.09.85 FR 8513628**

(43) Date de publication de la demande: **16.09.87 Bulletin 87/38**

(45) Mention de la délivrance du brevet: **23.01.91 Bulletin 91/04**

(84) Etats contractants désignés: **AT BE CH DE FR GB IT LI LU NL SE**

(56) Documents cités:
**EP-A-0 040 282**
**EP-A-0 136 937**
**EP-A-0 188 950**
**DE-A- 594 463**
**DE-A-2 638 275**
**FR-A-1 440 105**
**FR-A-2 545 003**
**FR-A-2 550 953**
**US-A-3 434 912**
**US-A-3 944 658**

**See also references of WO8701694**

(73) Titulaire: **CENTRE NATIONAL DE LA RECHERCHE SCIENTIFIQUE (CNRS)**
**15, Quai Anatole France**
**F-75007 Paris (FR)**

(72) Inventeur: **COT, Louis**
**Résidence Les Pins no 3 Clapiers**
**F-34170 Castelnau le Lez (FR)**
Inventeur: **GUIZARD, Christian, Gilbert**
**Rue des Remparts Puechabon**
**F-34150 Gignac (FR)**
Inventeur: **LARBOT, André, Bernard**
**940, rue du Ravin d'Embarre**
**F-34980 Saint Clément la Rivière (FR)**

(74) Mandataire: **Nony, Michel et al**
**Cabinet Nony 29, rue Cambacérès**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 236 398 B1

**Description**

La présente invention a pour objet de nouvelles couches minces minérales microporeuses à porosité ouverte, déposées sur un support poreux, et ayant des propriétés de conduction de l'électricité.

L'invention a également pour objet la préparation de ces couches minces microporeuses et leur application, notamment à la séparation, à la purification et à la caractérisation d'espèces chimiques.

On sait que les techniques de filtration, et en particulier les techniques d'ultrafiltration, sont couramment utilisées pour séparer les espèces chimiques, ou encore pour stériliser certaines préparations biologiques. Les éléments filtrants utilisés sont généralement des membranes microporeuses organiques qui présentent divers inconvénients, et la tendance de la recherche actuelle est de réaliser des structures de filtration sous la forme de céramiques poreuses qui présentent des bonnes propriétés de résistance mécanique, chimique et thermique.

Dans la demande de brevet français n° 81.06340 (2.502.508), on a proposé de réaliser des structures de filtration constituées par un support poreux en matériau fritté à grains relativement gros portant une couche mince filtrante en un matériau fritté à grains relativement fins.

On a par ailleurs décrit dans les demandes de brevet européens EP—A—0040282 et 0188950 des membranes poreuses à base de divers oxydes. Toutefois, ces demandes de brevet européen ne prévoient pas de réaliser des membranes à base d'oxyde conducteur, et ne décrivent pas de membranes ayant des propriétés de conduction à température ambiante.

On obtient ainsi des filtres comportant une couche filtrante microporeuse ayant des pores d'un diamètre de l'ordre de 0,01 micromètre, cette couche filtrante étant appliquée sur un support macroporeux ayant un diamètre de pores de l'ordre de quelques micromètres.

On sait pair ailleurs que les procédés sol-gel constituent une technique très intéressante pour obtenir des couches minces d'oxydes métalliques.

Ces procédés sol-gel consistent principalement à préparer des solutions gélifiables de dérivés métalliques et, après l'obtention d'un gel, à effectuer un traitement thermique pour transformer le gel en matériau dense (verre ou en céramique).

Il existe classiquement deux voies pour arriver à la formation d'un gel préfigurant l'état solide obtenu après traitement thermique.

Selon une première méthode, on prépare un milieu aqueux une dispersion de particules colloïdales sous la forme de sol (solution colloïdale). Les produits de départ peuvent être obtenus à partir de sels métalliques et/ou par hydrolyse de composés organométalliques. La transition sol-gel est provoquée par déstabilisation de la solution colloïdale sous l'effet d'une variation de la teneur en électrolyte, d'une variation du pH ou d'une variation de concentration du milieu. Dans ce cas on obtient des gels dont la cohésion est due à une compétition entre les interactions physiques de type électrostatique et les forces de Van der Walls.

La deuxième classe de gels est obtenue par hydrolyse ménagée d'alkoxydes métallique en solution dans un solvant organique. Cette hydrolyse ménagée permet l'obtention de gels polymérisés par polycondensation des produits d'hydrolyse.

On peut par ces deux méthodes, déposer des couches minces sur des substrats de géométries variées et obtenir ainsi des couches minces de verre, de céramique et de vitro-céramique à des températures inférieures à celles utilisées dans les techniques classiques.

La technique sol-gel permet en outre d'assurer une bonne homogénéité du matériau grâce à la grande dispersion des produits de départ. Cette technique permet en outre d'introduire facilement des additifs variés.

La technique sol-gel n'avait jamais été utilisée jusqu'à présent pour obtenir des couches minces poreuses à porosité ouverte.

La présente invention, qui a été faite au Laboratoire de Chimie Minérale Appliquée de l'Université des Sciences et Techniques du Languedoc, qui est associé au Centre National de la Recherche Scientifique n° 407, a pour objet de nouvelles couches minces minérales microporeuses, à porosité ouverte, déposées sur un support poreux, caractérisées par le fait qu'elles sont constituées d'au moins deux oxydes métalliques choisis de façon à conférer auxdites couches minces des propriétés de conduction électrique.

La conduction électrique peut être de type électronique et/ou ionique.

Généralement le diamètre des pores desdites couches minces est de 1 à 200 nm (10 à 2000 Angströms), leur volume poreux est de 10 à 50%, et leur épaisseur est de 1 nm (10 Angströms) à 10 micromètres environ.

Quant aux supports poreux sur lesquels sont déposées les couches minces de l'invention, ce sont de préférence des substrats minéraux sous forme de céramiques obtenues de manière connue au départ de poudres frittables telles que l'alumine, le carbure de silicium, etc.

De préférence, les couches minces minérales microporeuses de l'invention sont préparées par traitement thermique d'un gel obtenu par un procédé sol-gel.

La présente invention a donc pour objet des couches minces minérales microporeuses à porosité ouverte ayant des propriétés de conduction électrique, à base d'oxydes, déposées sur un support poreux, caractérisées par le fait que:

—soit elles comprennent comme constituants l'association d'au moins un oxyde choisi parmi:

$SnO_2$, $ZrO_2$, $SiO_2$, $TiO_2$, ZnO, $In_2O_3$ et $TaO_5$

et d'au moins un autre oxyde choisi parmi:

$RuO_2$, $PtO_2$, $IrO_2$ et PdO,

—soit elles comprennent comme constituants des oxydes choisis parmi $SiO_2$, $ZrO_2$, $TaO_5$ et leurs mélanges, en association avec le phosphore et un métal alcalin.

Par exemple, les couches minces à base de $SnO_2$, $In_2O_3$, ZnO, dont des propriétés de conduction électronique.

Une autre classe d'oxydes utilisable pour réaliser les couches minces de la présente invention est constituée par les oxydes ou mélanges d'oxydes tels que $SiO_2$, $ZrO_2$, $TaO_5$, qui, en association avec le phosphore et des métaux alcalins, donne des composés du type NASICON ($Na_3Zr_2Si_2PO_{12}$) TITSICON ($Na_3Zr_{1,55}Si_{2,3}P_{0,7}O_{11}$) ou d'autres compositions telles que: $Li_{0,8}Zr_{1,8}Ta_{0,2}(Po_4)_3$. On sait que ces composés ont des propriétés de conducteurs ioniques.

On connait également des compositions à base d'oxyde de zirconium IV, de titane IV, de hafnium IV, de thorium IV et d'aluminium décrites dans la demande de brevet français n° 83.06934, dont certaines sont des conducteurs ioniques et/ou électroniques.

Parmi les composés de la demande de brevet français n° 83.06934 qui sont utilisables selon la présente invention, on citera notamment celles qui répondent à la formule:

$$M_xM'_yM''_zP_uX_vO_t$$

dans laquelle:

M représente un métal alcalin,

M' représente au moins un métal choisi parmi le zirconium IV, et le titane IV,

M'' représente le silicium,

P est l'élément phosphore et 0 l'élément oxygène,

X représente le tantale,

x, y, z, u, v, t représentant les proportions molaires respectives des constituants M, M', M'', P, X et O étant entendu que x, y, u et t sont différent de zéro.

Les couches minces de l'invention peuvent être obtenues par dépôt sur le support poreux d'une couche mince d'un sol gélifiable d'oxydes ou de précurseurs d'oxydes, ledit dépôt étant suivi de gélification, puis d'un traitement thermique contrôlé du gel de façon à transformer celui-ci et une structure poreuse à porosité ouverte.

L'invention a également pour objet un procédé de préparation d'une couche mince telle que définie précédemment. Ce procédé est caractérisé par le fait que l'on prépare un sol gélifiable d'oxydes métalliques ou de précurseurs desdits oxydes, quie l'on dépose ledit sol sous la forme d'une couche mince sur un support poreux, et qu'après gélification on procède à un séchage du gel à température inférieure à 200°C, puis à un traitement thermique contrôlé à une température de 400 à 1000°C. On a découvert qu'il est possible de transformer la couche mince de gel en structure poreuse à porosité ouverte en chauffant rapidement le support revêtu de la couche mince, par exemple à raison de 100°C/minute. Ces vitesses de chauffe sont rendues possibles en effectuant le traitement thermique dans un four à translation, sans que cela entraîne l'apparition de défauts dans la couche.

Le mélange des précurseurs d'oxyde (sels métalliques et/ou composés organo-métalliques) est effectué en solution aqueuse ou organique. Ce mélange est traité de façon à obtenir un sol. La viscosité de ce sol est ajoutée en fonction de la technique de dépôt envisagée.

On peut appliquer le sol sur le support solide selon les méthodes connues, par exemple par centrifugeage, par trempage, etc. Il convient d'éviter des inhomogénéités dans l'épaisseur du dépôt.

De préférence, on ajuste la viscosité du sol, avant application sur le substrat poreux, avec un agent de viscosité organique tel que par exemple l'hydroxyéthylcellulose, de façon que le sol soit suffisamment visqueux pour ne pas pénétrer en proportion importante dans les pores du substrat.

On laisse ensuite le sol déposé sur le substrat poreux jusqu'à gélification.

La phase suivante est celle du séchage au cours duquel le gel va perdre la majorité du solvent emprisonné. Ce séchage est effectué à température inférieure à 200°C, généralement entre 40 et 110°C en prenant les précautions habituelles pour que le gel conserve une bonne homogénéité de dimensions et pour éviter l'apparition de défauts.

La dernière étape est celle du traitement thermique au cours duquel le gel perd la totalité de sa partie organique pour se retrouver à l'état d'oxyde.

L'invention a également pour objet l'application des couches minces décrites ci-dessus à la séparation, la purification ou la caractérisation d'espèces chimiques par filtration combinée à l'action d'un courant électrique (électro-ultrafiltration). Par exemple, en couplant les propriétés de conduction électrique et de porosité ouverte, on peut, grâce à l'influence d'un champ de potentiel électrique sur le transfert sélectif de

matière à travers la couche mince filtrante, séparer des molécules non seulement d'après leur taille, mais aussi d'après leur charge.

Les exemples illustrent l'invention.

Exemple 1

On ajoute 0,57 g de $Ti(OCH(CH_3)_2)_4$ à une solution de $HNO_3$ dilué à 10% en poids; il se forme un précipité qui dispairaît en agitant. Une fois que la solution est transparente et homogène, on ajoute 0,25 g de $RuCl_3$ et on porte le mélange à 50°C sous agitation pendant 10 h afin de former un complexe entre le titane et le ruthénium dans un réseau d'oxydes. On observe une perte en poids d'environ 25% (élimination d'eau et d'isopropanol).

On ajoute ensuite 2 g d'hydroxyéthylcellulose à 2,5% tout en agitant pour homogénéiser la solution et obtenir une viscosité suffisante permettant d'éviter la pénétration de la couche dans le support en céramique lors du dépôt.

On dépose sur le sol par imprégnation sur un support poreux en céramique (carbure de silicium) dont le diamètre des pores est inférieur au micron, en immergeant le support dans le sol.

On laisse le support sur une plaque chauffante tenue à une température de 50°C à 80°C pendant 12 h; la couche prend alors un aspect brillant.

Enfin, en porte l'échantillon à une température de 700°C dans un four à translation avec une vitesse de défilement d'environ 9 cm/min. Cette cuisson permet d'éliminer tous les produits organiques restant dans la couche, et aboutit à la formation d'une couche d'oxydes $TiO_2$—$RuO_2$.

L'épaisseur, l'homogénéité et l'aspect de la membrane sont contrôlés au microscope électronique à balayage.

La couche ainsi formée présente un caractère de conduction électronique.

Les caractéristiques sont les suivantes:

—diamètre moyen des pores: 100 Angströms (10 nm)

—volume poreux: 40%

—conductivité: environ 2 $ohm^{-1}cm^{-1}$

De façon analogue, on a préparé des couches minces filtrantes déposées sur supports poreux d'alumine, d'aluminosilicates, etc.

Exemple 2

Dans 5 g d'acide acétique pur, on dissout 0,56 g de $NaOC_2H_5$ et respectivement 1 g de $Si(OC_2H_5)_4$ et 1,57 g de $Zr(OC_3H_7)_4$ et on agite jusqu'à ce que la solution devienne transparente et homogène, puis on ajoute 3 g d'une solution de $NH_4H_2PO_4$ à 20%. Une hydrolyse rapide est alors effectuée et on obtient un produite pâteux. On laisse évaporer le solvent dans une étuve et on aboutit à une poudre qu'on broie finement. La poudre ainsi obtenue est dissoute dans $H_2O$ à 5% et peptisée par l'acide orthophosphorique qu'on ajoute goutte à goutte. On obtient ainsi un sol qui s'épaissit peu à peu sous l'action de l'agitation. On dépose une couche mince dudit sol sur un support en céramique du même type que dans l'exemple précédent. On sèche à l'air libre pendant 5 heures. La cuisson est effectuée dans un four à translation à 700°C, comme à l'exemple 1.

La couche obtenue est parfaitement homogène; l'épaisseur est de l'ordre de 0,4 à 0,8 micromètres,

—diamètre moyen de pores: 150 Angströms (15 nm)

—volume poreux: 35%

**Revendications**

1. Couches minces minérales microporeuses à porosité ouverte ayant des propriétés de conduction électrique, à base d'oxydes, déposées sur un support poreux, caractérisées par le fait que:

—soit elles comprennent comme constituants l'association d'au moins un oxyde choisi parmi:

$$SnO_2, ZrO_2, SiO_2, TiO_2, ZnO, In_2O_3 \text{ et } TaO_5$$

et d'au moins un autre oxyde choisi parmi:

$$RuO_2, PtO_2, IrO_2 \text{ et } PdO,$$

—soit elles comprennent comme constituants des oxydes choisis parmi $SiO_2$, $ZrO_2$, $TaO_5$ et leurs mélanges, en association avec le phosphore et un métal alcalin.

2. Couches minces selon la revendication 1, caractérisées par le fait qu'elles sont constituées par l'association de $TiO_2$ et $RuO_2$.

3. Couches minces selon la revendication 1, caractérisées par le fait qu'elles sont constituées par des oxydes répondant à la formule:

$$M_xM'_yM''_zP_uX_vO_t$$

dans laquelle:

M représente un métal alcalin,

M' représente au moins un métal choisi parmi le zirconium IV et le titane IV,

M'' représente le silicium,

X représente le tantale,

x, y, z, u, v et t représentent les proportions molaires respectives des constituants M, M', M'', phosphore, X et oxygène,

étant entendu que x, y, u, et t sont différents de zéro.

4. Couches minces selon la revendication 1, caractérisées par le fait qu'elles sont constituées par des oyxdes choisis parmi:

—$Na_3Zr_2Si_2PO_{12}$,

—$Na_3Zr_{1,55}Si_{2,3}P_{0,7}O_{11}$, et

—$Li_{0,8}Zr_{1,8}Ta_{0,2}(PO_4)_3$.

5. Couches minces selon l'une quelconque des revendications précédentes, caractérisé par le fait que le diamètre des pores est de 1 à 200 nm et que le volume poreux est de 10 à 50%.

6. Couches minces selon l'une quelconque des revendications précédentes, caractérisées par le fait qu'elles ont une épaisseur pouvant varier de 1 nanomètre à 10 micromètres.

7. Procédé de préparation d'une couche mince telle que définie dans l'une quelconque des revendications précédentes, caractérisé par le fait que l'on prépare un sol gélifiable desdits oxydes ou de précurseurs desdits oxydes, que l'on dépose ledit sol sous la forme d'une couche mince sur un support poreux, et qu'après gélification, on procède à un séchage du gel à température inférieure à 200°C, puis à un traitement thermique contrôlé à une température de 400 à 1000°C.

8. Procédé selon la revendication 7, caractérisé par le fait que l'on prépare un sol d'alcoolate et éventuellement de dérivés de métaux que l'on désire introduire, dans lesquels le métal considéré est substitué par des groupes partants, dans un solvant approprié permettant une réaction de solvolyse des produits de départ, que l'on ajuste à la viscosité du sol par addition d'un agent de viscosité organique approprié et que l'on dépose ledit sol sous forme d'une couche mince sur le support poreux.

9. Procédé selon l'une quelconque des revendications 7 et 8, caractérisé par le fait que l'on chauffe rapidement le support revêtu de la couche mince, par exemple à raison de 100°C/minute.

10. Application des couches minces selon l'une quelconque des revendications 1 à 6, à la séparation, la purification ou la caractérisation d'espèces chimiques par électro-ultrafiltration.

**Patentansprüche**

1. Dünne mineralische mikroporöse Schichten mit offener Porosität und elektrischer Leitfähigkeit auf Basis von Oxiden, die auf einen porösen Träger aufgetragen sind, dadurch gekennzeichnet, daß sie:

—entweder als Bestandteile eine Verbindung aus mindestens einem Oxid ausgewählt unter:

$$SnO_2, ZrO_2, SiO_2, TiO_2, ZnO, In_2O_3 \text{ und } TaO_5$$

und mindestens einem anderen Oxid ausgewählt unter:

$$RuO_2, PtO_2, IrO_2 \text{ und } PdO$$

enthalten, oder

—als Bestandteile Oxide ausgewählt unter $SiO_2$, $ZrO_2$, $TaO_5$ und deren Gemischen in Verbindung mit Phosphor und einem Alkalimetall enthalten.

2. Dünne Schichten nach Anspruch 1, dadurch gekennzeichnet, daß sie aus einer Verbindung aus $TiO_2$ und $RuO_2$ gebildet sind.

3. Dünne Schichten nach Anspruch 1, dadurch gekennzeichnet, daß sie aus Oxiden gemäß der Formel:

$$M_xM'_yM''_zP_uX_vO_t$$

gebildet sind, in der:

M ein Alkalimetall bedeutet,

M' mindestens ein Metall ausgewählt unter Zirkonium (IV) und Titan (IV) bedeutet,

M'' Silizium bedeutet,

X Tantal bedeutet,

x, y, z, u, v und t die jeweiligen molaren Anteile der Bestandteile M, M', M'', Phosphor, X und Sauerstoff bedeuten, unter der Maßgabe, daß x, y, u, und t von Null verschieden sind.

4. Dünne Schichten nach Anspruch 1, dadurch gekennzeichnet, daß sie aus Oxiden ausgewählt unter:

—$Na_3Zr_2Si_2PO_{12}$,

—$Na_3Zr_{1,55}Si_{2,3}P_{0,7}O_{11}$, und

—$Li_{0,8}Zr_{1,8}Ta_{0,2}(PO_4)_3$ gebildet sind.

5. Dünne Schichten nach einem der vorhergehenden Ansprüche, dadurch gekennzeichnet, daß der Porendurchmesser 1 bis 200 nm und das Porenvolumen 10 bis 50% beträgen.

6. Dünne Schichten nach einem der vorhergehenden Ansprüche, dadurch gekennzeichnet, daß sie eine Dicke haben, die von 1 Nanometer bis 10 Mikrometer varieren kann.

7. Verfahren zur Herstellung einer dünnen Schicht, wie sie in den vorhergehenden Ansprüchen definert worden ist, dadurch gekennzeichnet, daß ein gelierbares Sol dieser Oxide oder der Vorläufer dieser Oxide hergestellt wird, dieses Sol in Form einer dünnen Schicht auf einen porösen Träger aufgetragen wird, und nach der Gebildung eine Trocknung des Gels bei einer Temperatur unterhalb von 200°C erfolgt, worauf sich eine kontrollierte Wärmebehandlung bei einer Temperatur von 400 bis 1000°C anschließt.

8. Verfahren nach Anspruch 7, dadurch gekennzeichnet, daß ein Sol eines Alkoholats und gegebenenfalls von Derivaten der Metalle, die eingeführt werden sollen, in denen das betreffende Metall mit Abgangsgruppen substituiert ist, in einem geeigneten Lösungsmittel, das eine Solvolysereaktion der Ausgangsstoffe gestattet, hergestellt wird, die Viskosität des Sols durch Zugabe eines geeigneten organischen viskositätsregulierenden Mittels eingestellt wird, und das Sol in Form einer dünnen Schicht auf den porösen Träger auftragen wird.

9. Verfahren nach einem der Ansprüche 7 und 8, dadurch gekennzeichnet, daß der mit der dünnen Schicht bedeckte Träger schnell, beispielsweise mit 100°C pro Minute, erhitzt wird.

10. Verwendung der dünnen Schichten nach einem der Ansprüche 1 bis 6 zur Trennung, Reinigung oder Bestimmung von chemischen Verbindungen mittels Elektro-Ultrafiltration.

## Claims

1. Thin microporous mineral layers of open porosity having properties of electric conductivity, based on oxides and deposited on a porous support, characterized in that:

—either they comprise as constituents at least one oxide selected from:

$$SnO_2, ZrO_2, SiO_2, TiO_2, ZnO, In_2O_3 \text{ and } TaO_5$$

associated with at least one other oxide selected from:

$$RuO_2, PtO_2, IrO_2 \text{ and } PdO,$$

—or they comprise as constituents oxides selected from $SiO_2$, $ZrO_2$, $TaO_5$ and mixtures thereof, associated with phosphorus and an alkali metal.

2. Thin layers according to Claim 1, characterized in that they are composed of $TiO_2$ associated with $RuO_2$.

3. Thin layers according to Claim 1, characterized in that they are composed of oxides corresponding to the formula:

$$M_xM'_yM''_zP_uX_vO_t$$

in which:

M is an alkali metal,

M′ is at least one metal selected from zirconium(IV) and titanium(IV),

M″ is silicon,

X is tantalum,

x, y, z, u, v and t are the molar proportions of the constituents M, M′, M″, phosphorus, X and oxygen, respectively,

it being understood that x, y, u, and t are different from zero.

4. Thin layers according to Claim 1, characterized in that they are composed of oxides selected from:

—$Na_3Zr_2Si_2PO_{12}$,

—$Na_3Zr_{1.55}Si_{2.3}P_{0.7}O_{11}$, and

—$Li_{0.8}Zr_{1.8}Ta_{0.2}(PO_4)_3$.

5. Thin layers according to any one of the preceding claims, characterized in that the pore diameter is from 1 to 200 nm and the pore volume is from 10 to 50%.

6. Thin layers according to any one of the preceding claims, characterized in that they have a thickness which can vary from 1 nanometre to 10 micrometres.

7. Process for the preparation of a thin layer such as defined in any one of the preceding claims, characterized in that a gellable sol of the said oxides or precursors of the said oxides is prepared, in that the said sol is deposited in the form of a thin layer on a porous support, and in that after gelling the next step is drying of the gel at a temperature below 200°C, followed by a heat treatment controlled at a temperature from 400 to 1,000°C.

8. Process according to Claim 7, characterized in that a sol of an alcoholate and, if desired, of metallic derivatives to be introduced, in which the metal in question is substituted by leaving groups, is prepared in

an appropriate solvent in which a solvolysis reaction of the starting compounds can be carried out, in that the viscosity of the sol is adjusted by adding an appropriate organic viscosity agent and in that the said sol is deposited in the form of a thin layer on the porous support.

9. Process according to either of Claims 7 or 8, characterized in that the support coated with the thin layer is rapidly heated, for example at a rate of 100°C/minute.

10. Use of the thin layers according to any one of Claims 1 to 6 for separation, purification and characterization of chemical substances by electro-ultrafiltration.